# EUROPÄISCHE PATENTSCHRIFT

(11) **EP 2 805 808 B1**
(45) Veröffentlichungstag und Bekanntmachung des Hinweises auf die Patenterteilung: **24.08.2022**
(21) Anmeldenummer: 14167493.7
(22) Anmeldetag: 08.05.2014
(51) Int. Cl.: B29C 70/34, B29C 70/54

(54) **Verfahren und Vorrichtung zur Verformung eines Bauteils mit einer textilen Grundstruktur**
Method and device for deformation of a component with a textile base structure
Procédé et dispositif de déformation d'un composant doté d'une structure de base en textile

(30) Priorität: 22.05.2013 DE 102013008692
(43) Veröffentlichungstag der Anmeldung: 26.11.2014
(73) Patentinhaber: Airbus Operations GmbH, 21129 Hamburg (DE)
(72) Erfinder: Seegel, Hauke, 21129 Hamburg (DE); Fastert, Claus, 21129 Hamburg (DE); Gillessen, Alexander, 21129 Hamburg (DE); Kupski, Julian, 21129 Hamburg (DE)

(56) Entgegenhaltungen:
- DE-A1- 19 540 189
- GB-A- 738 763
- GB-A- 895 339

## Beschreibung

Die Erfindung betrifft ein Verfahren und eine Vorrichtung zur Verformung eines Bauteils mit einer textilen Grundstruktur, insbesondere eines Fasergewebes zur Verwendung in faserverstärkten Verbundmaterialien oder eines Faser-Prepregs.

Im Flugzeugbau gibt es Bestrebungen, als lasttragende Bauteile zunehmend Bauteile einzusetzen, die vollständig oder teilweise aus faserverstärkten Verbundmaterialien, beispielsweise kohlenstofffaserverstärkten Kunststoffen (CFK) bestehen. Beispielsweise beschreibt die DE 10 2007 062 111 A1 eine aus kohlenstofffaserverstärktem Kunststoff bestehende Querträgerstruktur, die der Abstützung der einzelnen Paneele eines Flugzeugfußbodensystems zur Trennung einer Passagierkabine von einem unterhalb der Passagierkabine angeordneten Frachtraum dient. Ferner ist es beispielsweise aus der DE 10 2004 001 078 A1 bzw. der CN 100418850 bekannt, Flugzeugrumpfsegmente mit einer in Sandwichbauweise ausgeführten Haut sowie Verstärkungselementen (z.B. Spanten, Stringer) aus faserverstärkten Verbundmaterialien zu versehen.

Zur Herstellung von Flugzeugstrukturbauteilen aus faserverstärkten Verbundmaterialien wird in der Regel zunächst aus Faser-Prepregs ein mehrschichtiges Laminat aufgebaut. Die Faser-Prepregs umfassen ein Gewebe oder Gelege aus Verstärkungsfasern, die mit einer Oberflächenschicht aus einem ungehärteten Kunststoffmaterial, beispielsweise einem Epoxidharzmaterial versehen sind. Der Laminataufbau kann manuell oder automatisiert erfolgen. Anschließend werden die Faser-Prepregs in eine gewünschte Form eines eine Flugzeugaußenhaut bildenden Flächenabschnitts sowie eines einen Spant oder Stringer bildenden Verstärkungsabschnitts gebracht. Schließlich wird das auf die Oberflächen der Fasern aufgebrachte Kunststoffmaterial in einem Autoklavzyklus unter Druck und/oder erhöhter Temperatur ausgehärtet, so dass ein Verbundmaterial mit einer Matrix aus einem ausgehärteten Kunststoff und in die Matrix eingelagerten Verstärkungsfasern entsteht. Ein derartiger Prozess ist beispielsweise in der DE 10 2010 050 740 B4 bzw. der WO 2012/062441 A2 beschrieben.

GB 738,763 betrifft das Verzieren von Kunststoffgegenständen mit nicht planen Flächen durch Aufpressen von dünnen, mit Kunstharzlösung imprägnierten Folien. Die Verzierungen können Textilfaserstoffe, Glasfaserstoffe oder auch geflochtene Sperrholzfolien sein. Die Vorrichtung weist einen Kessel mit einer darin angeordneten Vorform auf. In der Vorform sind Öffnungen vorhanden. Der Kessel ist mit einer auf den Erweichungspunkt der Folie erwärmten Flüssigkeit, beispielsweise Wasser, so gefüllt, dass eine auf dem Rand des Kessels luft- und wasserdicht befestigte, als unterer Folienformer dienende Gummimembran den Füllraum des Kessels leicht überhöht. Über dem Kessel ist ein Stempel vertikal beweglich angeordnet, der einen oberen Folienformer in Form einer Gummimembran aufweist. Der Stempel ist ebenfalls mit einer Flüssigkeit, wie zum Beispiel Wasser, gefüllt. Nachdem der Stempel auf dem Kessel eine dazwischenliegende Folie zwischen den beiden Gummimembranen einschließt, wird die Flüssigkeit aus dem Kessel abgepumpt, sodass ein Vakuum entsteht. Die beiden Gummimembranen werden mit der dazwischen festgehaltenen Folie in die darunterliegende Vorform gesogen. Dabei wird auch das über der Vorform vorhandene Wasser durch die Öffnungen abgesaugt.

GB 895,339 betrifft ein Verfahren zum Herstellen von gewölbten Körpern aus glasfaserverstärktem Kunstharz, bei dem von einem ebenen Verbund ausgegangen wird, der aus zwei Folien und einer mit flüssigem, härtbarem Kunstharz luftblasenfrei durchdrängten Glasfaserschicht besteht. Zwischen zwei Folien wird eine kunstharzgetränkte Glasfasermatte eingeschlossen und mittels Pressbacken randseitig festgeklemmt. An der Unterseite des Rahmens befindet sich eine druckdichte Kammer, die über eine Leitung an eine Vakuumpumpe angeschlossen ist. Beim Arbeiten der Vakuumpumpe wird die Glasfasermatte zusammen mit den Folien in den evakuierten Raum so lange gezogen, bis eine gewünschte Stichhöhe erreicht ist. Soll keine freie Formung erfolgen, kann der zu formende Gegenstand unter der Wirkung des Vakuums gegen eine Matrize gepresst werden. Die Matrize oder Form ist hierbei mit Bohrungen versehen, welche den Matrizenraum mit dem eigentlichen Vakuumraum verbinden. Alternativ kann statt Luft auch Flüssigkeit in dem Raum vorhanden sein und mittels einer Pumpe abgesaugt werden.

DE 195 40 189 A1 betrifft eine Vorrichtung und Verfahren zur Herstellung von Formteilen aus Faserverbundwerkstoffen, die zwischen einer Formplatte mit einer gewölbten formgebenden Fläche und einem Formkern hergestellt werden. Zunächst wird eine Schicht aus einem Faserwerkstoff in die formgebende Fläche aufgebracht und verteilt. Danach wird ein flüssiger Matrixwerkstoff in die Formplatte eingefüllt, und zwar in einer Menge, die wenigstens der zur Herstellung des gewünschten Formteils erforderlichen Menge entspricht. Der Formkern wird auf die Frontplatte zubewegt und setzt sich zunächst mit seinem tiefsten Punkt auf die Schicht. Bei weiterer Bewegung des Formkerns wird dieser immer mehr verformt und gegen die Schicht gedrückt, sodass überflüssiger Matrixwerkstoff immer weiter verdrängt wird und in seinem Niveau ansteigt.

Die Erfindung ist auf die Aufgabe gerichtet, ein Verfahren und eine Vorrichtung zur Verformung eines Bauteils mit einer textilen Grundstruktur, insbesondere eines Fasergewebes zur Verwendung in faserverstärkten Verbundmaterialien oder eines Faser-Prepregs anzugeben, die es ermöglichen, kostengünstig eine hohe Bauteilqualität zu realisieren.

Diese Aufgabe wird durch ein Verfahren mit den Merkmalen des Anspruchs 1 und eine Vorrichtung mit den Merkmalen des Anspruchs 8 gelöst.

Bei einem Verfahren zur Verformung eines Bauteils mit einer textilen Grundstruktur, insbesondere eines Fasergewebes zur Verwendung in faserverstärkten Verbundmaterialien oder eines Faser-Prepregs wird das zu verformenden Bauteil zwischen einer ersten Form und einer zweiten Form angeordnet. Die erste Form kann beispielsweise starr fixiert und die zweite Form stempelartig relativ zu der ersten Form beweglich sein, um ein zwischen der ersten Form und der zweiten Form angeordnetes Bauteil in eine gewünschte Form zu bringen. Alternativ oder zusätzlich dazu kann auch die erste Form relativ zu der zweiten Form beweglich sein. Wesentlich ist lediglich, dass das zu verformende Bauteil durch das Zusammenwirken der ersten Form mit der zweiten Form in die gewünschte Form gebracht werden kann.

Eine Pressoberfläche der ersten Form ist zumindest teilweise mit einer Flüssigkeit bedeckt. Die Pressoberfläche der ersten Form wird vorzugsweise durch zumindest einen Abschnitt einer der zweiten Form zugewandten Oberfläche der ersten Form gebildet, der bei der Bearbeitung des zu verformenden Bauteils dazu dient, das zu verformende Bauteil mit Druck zu beaufschlagen. Durch die die Pressoberfläche der ersten Form zumindest teilweise bedeckende Flüssigkeit, gerät das zu verformende Bauteil jedoch zu Beginn des Verformungsvorgangs nicht in unmittelbaren Kontakt mit der Pressoberfläche, sondern lediglich mit einer die Pressoberfläche zumindest teilweise bedeckenden Flüssigkeitsschicht. Beispielsweise kann die Pressoberfläche der ersten Form als Trägerfläche für das zu verformende Bauteil dienen, so dass das zu verformende Bauteil auf die zumindest teilweise flüssigkeitsbedeckte Pressoberfläche der ersten Form gelegt und anschließend durch entsprechendes Zusammenwirken der ersten und der zweiten Form mit Druck beaufschlagt werden kann. Das zu verformende Bauteil ruht dann zumindest zu Beginn des Verformungsvorgangs auf der die Pressoberfläche zumindest teilweise bedeckenden Flüssigkeitsschicht.

Die Art der Flüssigkeit kann in Abhängigkeit der gewünschten Viskosität der Flüssigkeit gewählt werden. Beispielsweise kann ein Öl oder ein flüssiges Polymermaterial oder ein flüssiges Wachsmaterial dazu eingesetzt werden, die Pressoberfläche der ersten Form zumindest teilweise zu bedecken. Um die Pressoberfläche der ersten Form zumindest teilweise mit der Flüssigkeit zu bedecken, ist es grundsätzlich denkbar, die erste Form zumindest teilweise derart in einem die Flüssigkeit enthaltenden Behälter anzuordnen, dass die Flüssigkeit die Pressoberfläche der ersten Form zumindest teilweise bedeckt. Die Pressoberfläche der ersten Form kann dann in beliebiger Weise, beispielsweise auch konvex, gestaltet und beliebig, beispielsweise auch vertikal oder schräg, ausgerichtet sein. In Abhängigkeit des Designs der Pressoberfläche der ersten Form, kann die Flüssigkeit jedoch auch auf die Pressoberfläche aufgebracht werden, vorzugsweise bevor das zu verformende Bauteil auf eine als Trägerfläche für das zu verformende Bauteil dienende Pressoberfläche gelegt wird. Schließlich werden die erste Form und die zweite Form derart aneinander angenähert, dass das zwischen der ersten Form und der zweiten Form angeordnete Bauteil in eine gewünschte Form gebracht wird. Vorzugsweise werden die erste und die zweite Form gegeneinander gepresst, so dass das zwischen der ersten und der zweiten Form angeordnete Bauteil mit Druck beaufschlagt und dadurch in die gewünschte Form gebracht wird. Der Betrag des auf das Bauteil aufzubringenden Drucks kann in Abhängigkeit der Dimensionen und der Materialeigenschaften des zu verformenden Bauteils gewählt werden. In einer bevorzugten Ausführungsform des Verformungsverfahrens erfolgt die Annäherung der ersten und der zweiten Form in im Wesentlichen vertikaler Richtung.

Zu Beginn des Verformungsvorgangs steht das zu verformende Bauteil lediglich in Oberflächenkontakt mit der die Pressoberfläche zumindest teilweise bedeckenden Flüssigkeitsschicht, ist sozusagen schwimmend gelagert. Bei der Annährung der ersten und der zweiten Form und der damit verbundenen Verformung des zwischen der ersten und der zweiten Form angeordneten Bauteils wird die Flüssigkeit teilweise von der Pressoberfläche der ersten Form verdrängt.

Insbesondere wird die Flüssigkeit zunächst von den Bereichen der Pressoberfläche der ersten Form verdrängt, auf denen Bereiche des zu verformenden Bauteils lagern, die bei der Annäherung der ersten und der zweiten Form zuerst mit der zweiten Form in Kontakt gelangen und dadurch verformt werden. Im weiten Verlauf des Verformungsvorgangs erfolgt dann auch in weiteren Bereichen der Pressoberfläche eine Verdrängung der die Pressoberfläche zumindest teilweise bedeckenden Flüssigkeit. Dadurch nähert sich das zu verformende Bauteil kontinuierlich an die Pressoberfläche der ersten Form an, so dass eine Art kontinuierlicher Verformungsprozess realisiert werden kann. Das zwischen der ersten Form und der zweiten Form angeordnete Bauteil ist dabei während des Verformungsprozesses auf der Flüssigkeit schwimmend gelagert.

Mit Hilfe des Verfahrens zur Verformung eines Bauteils mit einer textilen Grundstruktur können auch großflächige Fasergewebe zur Verwendung in faserverstärkten Verbundmaterialien und großflächige Faser-Prepregs sehr exakt in eine gewünschte Form gebracht werden. Darüber hinaus ist die kontinuierliche Verformung mit vergleichsweise geringen Verformungskräften bzw. -drücken energiesparend durchführbar und sehr bauteilschonend, so dass auf aufwendige Schutzmaßnahmen zum Schutz des Bauteils bei der Verformung verzichtet werden kann. Vielmehr kann das Bauteil ohne Zwischenschritte von einer Schneidestation zu einer nach dem oben beschriebenen Verfahren arbeitenden Verformungsstation transportiert und dort in die gewünschte Form gebracht werden. Das Verfahren ist daher besonders gut zur Verformung von Fasergeweben, insbesondere sogenannten Non-Crimped Fabrics (NFCs) und Faser-Prepregs geeignet, die zur Verwendung in faserverstärkten Flugzeugkomponenten, insbesondere Flugzeugstrukturkomponenten vorgesehen sind. Die Fasern in den Fasergeweben und Faser-Prepregs, die als Kurzfasern oder Endlosfasern ausgebildet sein können, können Kohlenstofffasern, aber auch andere geeignete Fasern, wie z. B. Glasfasern sein. In den Faser-Prepregs können die Fasern in Form von Einzelfasern oder in Form von Gelegen oder Geweben vorliegen und in eine Matrix aus einem duroplastischen oder einem thermoplastischen Kunststoffmaterial eingebettet sein.

Die Pressoberfläche der ersten Form kann beliebig gestaltet sein. Vorzugsweise umfasst die Pressoberfläche der ersten Form jedoch eine Oberfläche einer in der ersten Form ausgebildeten Ausnehmung zumindest teilweise. Mit anderen Worten, in der ersten Form kann eine Ausnehmung ausgebildet sein, die zumindest teilweise in der Pressoberfläche der ersten Form angeordnet ist, so dass die Pressoberfläche der ersten Form einen konkav ausgebildeten Flächenabschnitt umfasst. Die Ausnehmung kann zumindest teilweise mit der Flüssigkeit gefüllt werden, um die Pressoberfläche der ersten Form zumindest teilweise mit der Flüssigkeit zu bedecken. Eine derartige Ausgestaltung der ersten Form bzw. der Pressoberfläche der ersten Form ermöglicht eine besonders einfache und kostengünstige Herstellung einer zur Ausführung des Verfahrens zur Verformung eines Bauteils mit einer textilen Grundstruktur eingesetzten Vorrichtung sowie eine einfache und damit kostengünstige Verfahrensführung.

Eine Pressoberfläche der zweiten Form ist vorzugsweise komplementär zu der Pressoberfläche der ersten Form ausgebildet. Folglich kann die Pressoberfläche der zweiten Form einen zu der in der Oberfläche der ersten Form ausgebildeten Ausnehmung komplementären Vorsprung zumindest teilweise umfassen. In einer besonders bevorzugten Ausführungsform des Verfahrens wirkt eine zweite Form, die eine konvex geformte Pressoberfläche umfasst, mit einer ersten Form zusammen, deren Pressoberfläche durch eine in der der zweiten Form zugewandten Oberfläche der ersten Form ausgebildete konkav geformte Ausnehmung gebildet wird. Bei einer derartigen Ausgestaltung der ersten und zweiten Form wird die in der Ausnehmung der ersten Form ausgenommene Flüssigkeit zuerst aus dem tiefsten Bereich der Ausnehmung verdrängt. Im weiteren Verlauf des Verformungsprozesses erfolgt dann auch eine teilweise Verdrängung der Flüssigkeit aus den übrigen Bereichen der Ausnehmung.

Bei zunehmender Annäherung der ersten und zweiten Form sinkt das zu verformende Bauteil folglich kontinuierlich tiefer in die Ausnehmung der zweiten Form und wird dabei kontinuierlich verformt. Insbesondere zur Verwendung in gekrümmten Baukomponenten, wie z.B. Flugzeugstrukturkomponenten, vorgesehene Fasergewebe und Faser-Prepregs können so in bauteilschonender Weise sehr exakt verformt werden.

In einer bevorzugten Ausführungsform des Verfahrens zur Verformung eines Bauteils mit einer textilen Grundstruktur wird die Flüssigkeit bei der Annäherung der ersten Form und der zweiten Form durch mindestens eine in der Pressoberfläche der ersten Form ausgebildete Öffnung von der Pressoberfläche ersten Form verdrängt. Dadurch kann auf einfache Weise eine gleichmäßige und kontrollierte Verdrängung der Flüssigkeit von der Pressoberfläche der ersten Form realisiert werden. Ferner ist eine kontrollierte Abfuhr der Flüssigkeit durch die in der Pressoberfläche der ersten Form ausgebildete Öffnung möglich. Falls gewünscht, kann eine Mehrzahl von Öffnungen in der Pressoberfläche der ersten Form ausgebildet sein, durch die die Flüssigkeit bei der Annäherung der ersten Form und der zweiten Form von der Pressoberfläche ersten Form verdrängt werden kann. Die Verteilung der Öffnungen in der Pressoberfläche kann so gewählt sein, dass ein Strömungsweg der Flüssigkeit bei der Annäherung der ersten Form und der zweiten Form wie gewünscht gesteuert werden kann.

Grundsätzlich wird die Flüssigkeit im Laufe des Verformungsprozesses teilweise von der Pressoberfläche der ersten Form verdrängt. Es verbleibt jedoch stets ein Rest an Flüssigkeit auf der Pressoberfläche, so dass auch in einem fortgeschrittenen Stadium des Verformungsprozesses eine schonende schwimmende Lagerung des zu verformenden Bauteils auf der Pressoberfläche der ersten Form möglich ist.

Vorzugsweise wird die Flüssigkeit von der Pressoberfläche der ersten Form in einen Sammelbehälter verdrängt. Der Sammelbehälter kann beispielsweise von einem Hohlraum der ersten Form gebildet werden, der über mindestens eine in der Pressoberfläche der ersten Form ausgebildete Öffnung mit der Pressoberfläche der ersten Form in Verbindung steht. Alternativ dazu kann der Sammelbehälter, beispielsweise über eine geeignet Fluidleitung, mit einem derartigen Hohlraum der ersten Form oder direkt mit der in der Pressoberfläche der ersten Form ausgebildeten Öffnung verbunden sein. In den Sammelbehälter verdrängte Flüssigkeit kann wiederverwendet werden, wobei vor der Wiederverwendung eine Aufbereitung der Flüssigkeit, beispielsweise durch Filtern zur Entfernung von Verunreinigungen, denkbar ist. Zwischen der die Pressoberfläche der ersten Form zumindest teilweise bedeckenden Flüssigkeit und dem zu verformenden Bauteil wird eine das zu verformende Bauteil gegenüber der Flüssigkeit abdichtende Folie angeordnet.

Bei der Folie kann es sich beispielsweise um eine Kunststofffolie, d.h. eine Folie auf Polymerbasis handeln, die vorzugsweise undurchlässig für die die Pressoberfläche der ersten Form zumindest teilweise bedeckende Flüssigkeit ist. Vorzugsweise wird zunächst die Flüssigkeit auf die Pressoberfläche der ersten Form aufgebracht und anschließend mit der Folie abgedeckt. Die Folie kann in zu der Pressoberfläche benachbarten Bereichen der der zweiten Form zugewandten Oberfläche der ersten Form befestigt werden. Beispielsweise ist eine Befestigung der Folie an der Oberfläche der ersten Form durch Kleben oder dergleichen denkbar. Die Folie dichtet das zu verformende Bauteil gegenüber der Flüssigkeit ab und verhindert somit, dass das Bauteil mit der Flüssigkeit in Kontakt gerät. Ferner kann durch die Folie eine unkontrollierte Verdrängung der Flüssigkeit von der Pressoberfläche, beispielsweise über einen Randbereich der Pressoberfläche hinaus, vermieden werden. Bei entsprechender Ausgestaltung der Pressoberfläche der ersten Form kann die Folie somit für eine kontrollierte Verdrängung der Flüssigkeit durch eine in der Pressoberfläche ausgebildete Öffnung sorgen.

Falls gewünscht, kann die Flüssigkeit und/oder die erste Form und/oder die zweite Form beheizt werden. Durch entsprechende Beheizung der Flüssigkeit, der ersten Form und/oder der zweiten Form kann beispielsweise die Viskosität der Flüssigkeit gesteuert werden. Ferner kann bei einem Bauteil, das ein aushärtbares Kunststoffmaterial enthält, beispielsweise einem Faser-Prepreg, zumindest eine Teilaushärtung des aushärtbaren Kunststoffmaterials erfolgen.

Bei der Annäherung der ersten Form und der zweiten Form kann mindestens ein Zusatzelement mit dem zu verformenden Bauteil verbunden werden. Bei dem Zusatzelement kann es sich beispielsweise um ein Versteifungselement, wie z.B. einen Stringer oder einen Spant handelt. Vorzugsweise wird das Zusatzelement mit dem zu verformenden Bauteil bei der Annäherung der ersten und der zweiten Form verpresst, so dass lediglich ein Verfahrensschritt zur Verformung des zu verformenden Bauteils und zur Verbindung des zu verformenden Bauteils mit dem Zusatzelement erforderlich ist. Das Zusatzelement kann in eine entsprechende Aufnahme der zweiten Form eingebracht und im Zuge der Annäherung der ersten und der zweiten Form auf eine der zweiten Form zugewandte Oberfläche des zu verformenden Bauteils gepresst werden.

Eine Vorrichtung zur Verformung eines Bauteils mit einer textilen Grundstruktur, insbesondere eines Fasergewebes zur Verwendung in faserverstärkten Verbundmaterialien oder eines Faser-Prepregs, umfasst eine erste Form und eine zweite Form, zwischen denen das zu verformende Bauteil positionierbar ist. Eine Pressoberfläche der ersten Form ist zumindest teilweise mit einer Flüssigkeit bedeckt ist. Ferner ist die Vorrichtung dazu eingerichtet, bei einer Annähern der ersten Form und der zweiten Form, derart, dass das zwischen der ersten Form und der zweiten Form angeordnete Bauteil in eine gewünschte Form gebracht wird, eine teilweise Verdrängung der Flüssigkeit von der Pressoberfläche der ersten Form zu ermöglichen.

Ferner umfasst die Vorrichtung eine Folie, die zwischen der die Pressoberfläche der ersten Form zumindest teilweise bedeckenden Flüssigkeit und dem zu verformenden Bauteil angeordnet ist, um das zu verformende Bauteil gegenüber der Flüssigkeit abzudichten.

Die Pressoberfläche der ersten Form kann eine Oberfläche einer in der ersten Form ausgebildeten Ausnehmung zumindest teilweise umfassen. Die Ausnehmung kann zumindest teilweise mit der Flüssigkeit füllbar sein, um die Pressoberfläche der ersten Form zumindest teilweise mit der Flüssigkeit zu bedecken.

Vorzugsweise ist in der Pressoberfläche der ersten Form mindestens eine Öffnung ausgebildet, durch die bei der Annäherung der ersten Form und der zweiten Form eine Verdrängung der Flüssigkeit ermöglicht wird.

Die Vorrichtung zur Verformung eines Bauteils mit einer textilen Grundstruktur kann einen Sammelbehälter zur Aufnahme der von der Pressoberfläche der ersten Form verdrängten Flüssigkeit umfassen.

Vorzugsweise umfasst die Vorrichtung zur Verformung eines Bauteils mit einer textilen Grundstruktur eine Heizeinrichtung zur Beheizung der Flüssigkeit, der ersten Form und/oder der zweiten Form. Die Heizeinrichtung kann separat von der ersten und der zweiten Form ausgebildet und dazu eingerichtet sein, lediglich die Flüssigkeit zu beheizen, bevor sie auf die Pressoberfläche der ersten Form aufgebracht wird oder während sie die Pressoberfläche der ersten Form zumindest teilweise bedeckt. Zusätzlich oder alternativ dazu kann die Vorrichtung eine Heizeinrichtung umfassen, die dazu geeignet ist, die erste Form und damit indirekt die auf die Pressoberfläche der ersten Form aufgebrachte Flüssigkeit zu beheizen. Schließlich kann eine Heizeinrichtung dazu eingerichtet sein, nur die zweite Form oder die zweite Form in Kombination mit der ersten Form und/oder der Flüssigkeit zu erwärmen.

Schließlich kann die zweiten Form der Vorrichtung zur Verformung eines Bauteils mit einer textilen Grundstruktur mindestens eine Aufnahme umfassen, die dazu eingerichtet ist, mindestens ein bei der Annäherung der ersten Form und der zweiten Form mit dem zu verformenden Bauteil zu verbindendes Zusatzelement aufzunehmen.

Ein oben beschriebenes Verfahren und/oder eine oben beschriebene Vorrichtung ist/sind besonders gut zur Verformung eines zur Herstellung einer Flugzeugkomponente, insbesondere einer Flugzeugstrukturkomponente vorgesehenen Bauteils mit einer textilen Grundstruktur geeignet.

Bevorzugte Ausführungsformen der Erfindung werden nun anhand der beigefügten schematischen Zeichnungen näher erläutert, von denen
- Figuren 1 und 2: eine Vorrichtung zur Verformung eines Bauteils mit einer textilen Grundstruktur in verschiedenen Betriebszuständen während der Ausführung eines Verfahrens zur Verformung des Bauteils zeigen und
- Figur 3: eine alternative Vorrichtung zur Verformung eines Bauteils mit einer textilen Grundstruktur in dem Betriebszustand während der Ausführung eines Verfahrens zur Verformung des Bauteils gemäß Figur 2 zeigt.

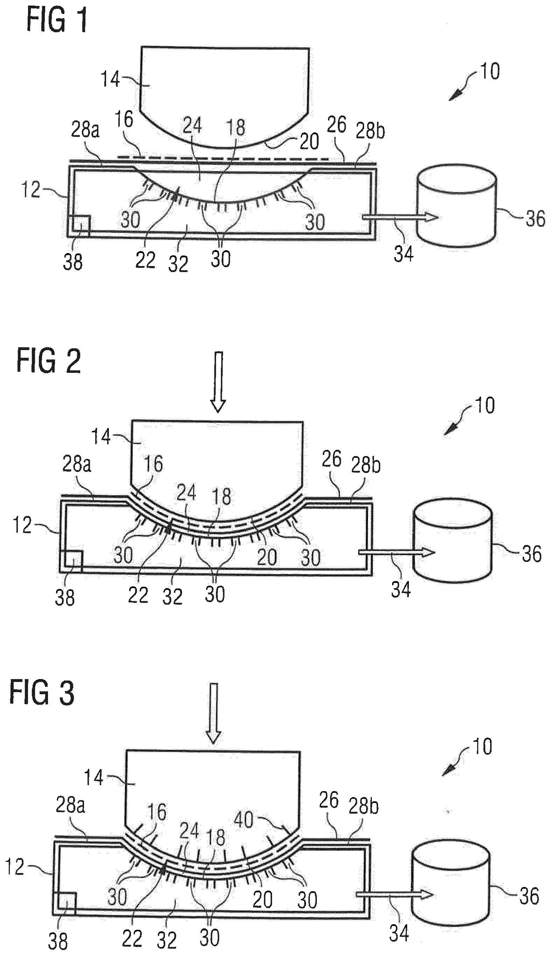

Eine in den Figuren 1 und 2 dargestellte Vorrichtung 10 zur Verformung eines Bauteils mit einer textilen Grundstruktur umfasst eine erste Form 12 sowie eine zweite Form 14. In dem gezeigten Ausführungsbespiel der Vorrichtung 10 ist die erste Form 12 starr fixiert, während die zweite Form 14 stempelartig in vertikaler Richtung relativ zu der ersten Form 12 bewegbar ist. Ein zu verformendes Bauteil 16 ist zwischen der ersten Form 12 und der zweiten Form 14 angeordnet. Bei dem zu verformenden Bauteil 16 kann es sich beispielsweise um ein Fasergewebe zur Verwendung in faserverstärkten Verbundmaterialien oder ein Faser-Prepreg handeln. Durch das Zusammenwirken der ersten Form 12 mit der zweiten Form 14 kann das zu verformende Bauteil 16 mit Druck beaufschlagt und dadurch in die gewünschte Form gebracht werden.

Wie insbesondere bei einem Vergleich der Figuren 1 und 2 deutlich wird, wird das zu verformende Bauteil 16 derart zwischen der ersten Form 12 und der zweiten Form 14 positioniert, dass es zwischen einander gegenüberliegenden Pressoberflächen 18, 20 der ersten und der zweiten Form 12, 14 angeordnet ist. Die Pressoberfläche 18 der ersten Form 12 wird durch eine konkav geformte Oberfläche einer in der ersten Form 12 ausgebildeten Ausnehmung 22 gebildet. Die Pressoberfläche 20 der zweiten Form 14 ist komplementär zu der Pressoberfläche 18 der ersten Form 12 ausgebildet und demzufolge konvex geformt. Durch das Zusammenwirken der ersten und der zweiten Form 12, 14 kann folglich ein flächig ausgebildetes zu verformendes Bauteil 16 in eine gekrümmte Form gebracht werden.

Wie insbesondere aus Figur 1 deutlich wird, ist die in der ersten Form 12 ausgebildete Ausnehmung 22 mit einer Flüssigkeit 24 die die durch die Oberfläche der Ausnehmung 22 gebildete Pressoberfläche 18 der ersten Form 12 überwiegend bedeckt. Bei der Flüssigkeit 24 kann es sich in Abhängigkeit der gewünschten Viskosität der Flüssigkeit 24 beispielsweise um ein Öl oder ein flüssiges Polymermaterial handeln. Insbesondere wird die Ausnehmung 22 mit der Flüssigkeit 24 gefüllt, bevor das zu verformende Bauteil 16 in der gewünschten Position zwischen der ersten und der zweiten Form 12, 14 angeordnet wird. Ferner wird die Flüssigkeit 24 vor der entsprechenden Positionierung des zu verformenden Bauteils 16 zwischen den Pressoberflächen 18, 20 der ersten und zweiten Form 12, 14 mit einer Folie 26 abgedeckt, die für eine Abdichtung des zu verformenden Bauteils 16 gegenüber der Flüssigkeit 24 sorgt.

Bei der Folie 26 kann es sich beispielsweise um eine Kunststofffolie, d.h. eine Folie auf Polymerbasis handeln, die undurchlässig für die auf die Pressoberfläche 18 der ersten Form 12 aufgebrachte Flüssigkeit 24 ist. Die Folie 26 wird, beispielsweise durch Kleben, an zu der Pressoberfläche 18 benachbarten, der zweiten Form 14 zugewandten Oberflächenbereichen 28a, 28b der ersten Form 12 befestigt. Das zu verformende Bauteil 16 wird folglich schwimmend auf der Flüssigkeit 24 gelagert, dennoch aber durch die Folie 26 gegenüber der Flüssigkeit 24 abgedichtet.

In der Pressoberfläche 18 der ersten Form 12 ist eine Mehrzahl von über die Pressoberfläche 18 verteilten Öffnungen 30 ausgebildet. Über diese Öffnungen 30 steht die Ausnehmung 22 in Fluidkontakt mit einem Hohlraum 32 der ersten Form 12. Der Hohlraum 32 der ersten Form 12 ist seinerseits über eine Fluidleitung 34 mit einem Sammelbehälter 36 verbunden. Schließlich umfasst die Vorrichtung 10 eine Heizeinrichtung 38, die dazu dient, bei Bedarf, die erste Form 12 und folglich die in der Ausnehmung 22 der ersten Form 12 aufgenommene Flüssigkeit 24 zu beheizen.

Zur Verformung des zwischen der ersten und der zweiten Form 12, 14 positionierten, über die Folie 26 schwimmend auf der Flüssigkeit 24 gelagerten Bauteils 16 wird die zweite Form 14 in vertikaler Richtung auf die erste Form 12 zu bewegt. Dabei gerät zunächst ein mittlerer Bereich der Pressoberfläche 20 der zweiten Form 14 in Kontakt mit einer der zweiten Form 14 zugewandten Oberfläche des Bauteils 16, so dass das Bauteil 16 in Richtung der Pressoberfläche 18 der ersten Form 12 gedrückt wird. Dabei wird die in der Ausnehmung 22 der ersten Form 12 aufgenommene Flüssigkeit 24 durch die in der Pressoberfläche 18 der ersten Form 12 ausgebildeten Öffnungen 30 aus der Ausnehmung 22 und folglich von der Pressoberfläche 18 der ersten Form verdrängt. Es versteht sich, dass ein Teil der Flüssigkeit 24 in einem ersten Schritt auch zunächst in Richtung eines Rands der Ausnehmung 22 gedrängt und erst in einem zweiten Schritt durch entsprechende in der Pressoberfläche 18 der ersten Form 12 vorgesehene Öffnungen 30 aus der Ausnehmung 22 abgeführt werden kann, wenn der mittlere Bereich der Pressoberfläche 20 der zweiten Form 14 einen entsprechenden Bereich des Bauteils 16 in Richtung der Pressoberfläche 18 der ersten Form 12 drückt.

Bei zunehmender Annährung der ersten und der zweiten Form 12, 14 wird das Bauteil 16 unter anhaltender Verdrängung der Flüssigkeit 24 aus der Ausnehmung 22 zunehmend in die Ausnehmung 22 hineingedrückt und dabei kontinuierlich verformt. Durch die Gestaltung der Pressoberflächen 18, 20 der ersten und der zweiten Form 12, 14 sowie durch eine geeignete Dimensionierung und Anordnung der in der Pressoberfläche 18 der ersten Form 12 ausgebildeten Öffnung 30 wird gewährleistet, dass während des gesamten Verformungsprozesses ein Rest an Flüssigkeit 24 auf der Pressoberfläche 18 der ersten Form 12 verbleibt, so dass auch in einem fortgeschrittenen Stadium des Verformungsprozesses eine schonende schwimmende Lagerung des zu verformenden Bauteils 16 auf der Pressoberfläche 18 der ersten Form 12 ermöglich ist.

Von der Pressoberfläche 18 der ersten Form 12 wird die Flüssigkeit 24 zunächst in den Hohlraum 32 der ersten Form 12 abgeführt und von dort über die Fluidleitung 34 in den Sammelbehälter 36 geleitet. Dabei wird durch die Folie 26 eine unkontrollierte Verdrängung der Flüssigkeit 24 aus der Ausnehmung 22, beispielsweise über einen Randbereich der Ausnehmung 22 hinaus, vermieden. Die den Sammelbehälter 36 abgeleitete Flüssigkeit 24 kann wiederverwendet werden, wobei vor der Wiederverwendung eine Aufbereitung der Flüssigkeit 24, beispielsweise durch Filtern zur Entfernung von Verunreinigungen, möglich ist.

Falls gewünscht, können die erste Form 12 und folglich die Flüssigkeit 24 mittels der Heizeinrichtung 38 auf eine gewünschte Temperatur erwärmt werden, beispielsweise um die Viskosität der Flüssigkeit 24 zu steuern. Ferner kann bei einem Bauteil 16, das ein aushärtbares Kunststoffmaterial enthält, beispielsweise einem Faser-Prepreg, durch entsprechende Beheizung der ersten Form 12 und der Flüssigkeit 24 zumindest eine Teilaushärtung des aushärtbaren Kunststoffmaterials bewirkt werden.

Die in Figur 3 veranschaulichte Vorrichtung 10 unterscheidet sich von der Anorndung gemäß den Figuren 1 und 2 dadurch, dass in der Pressoberfläche 20 der zweiten Form 14 eine Mehrzahl von Aufnahmen 40 ausgebildet sind. Die Aufnahmen 40 dienen der Aufnahme von Zusatzelementen 42, die dazu vorgesehen sind, bei der Annäherung der ersten Form 12 und der zweiten Form 14 mit dem zu verformenden Bauteil 16 verbunden zu werden. Bei den Zusatzelementen 42 kann es sich beispielsweise um Versteifungselemente, insbesondere Stringer oder Spante handeln, wie sie üblicherweise in Flugzeugstrukturkomponenten vorsehen sind. Die Zusatzelemente 42 werden bei der Annäherung der ersten und der zweiten Form 12, 14 mit dem Bauteil 16 verpresst, so dass lediglich ein Verfahrensschritt zur Verformung des Bauteils 16 und zur Verbindung des Bauteils 16 mit den Zusatzelementen 42 erforderlich ist.

Im Übrigen entsprechen die Struktur und die Funktion der Vorrichtung 10 gemäß Figur 3 der Struktur und der Funktion der in den Figuren 1 und 2 veranschaulichten Anordnung.

## Patentansprüche

1. Verfahren zur Verformung eines Bauteils (16) mit einer textilen Grundstruktur, insbesondere eines Fasergewebes zur Verwendung in faserverstärkten Verbundmaterialien oder eines Faser-Prepregs, wobei das Verfahren die folgenden Schritte umfasst:
- Bedecken einer Pressoberfläche (18) einer ersten Form (12) zumindest teilweise mit einer Flüssigkeit (24),
- Anordnen des zu verformenden Bauteils (16) zwischen der ersten Form (12) und einer zweiten Form (14), und
- Annähern der ersten Form (12) und der zweiten Form (14), derart, dass das zwischen der ersten Form (12) und der zweiten Form (14) angeordnete Bauteil (16) in eine gewünschte Form gebracht wird, wobei die Flüssigkeit (24) teilweise von der Pressoberfläche (18) der ersten Form (12) verdrängt wird, so dass ein Rest an Flüssigkeit (24) auf der Pressoberfläche (18) der ersten Form (12) während des gesamten Verformungsprozesses verbleibt, **dadurch gekennzeichnet, dass** das zwischen der ersten Form (12) und der zweiten Form (14) angeordnete Bauteil (16) während des Verformungsprozesses auf der Flüssigkeit (24) schwimmend gelagert ist.

2. Verfahren nach Anspruch 1,
**dadurch gekennzeichnet, dass** die Pressoberfläche (18) der ersten Form (12) eine Oberfläche einer in der ersten Form (12) ausgebildeten Ausnehmung (22) zumindest teilweise umfasst, wobei die Ausnehmung (22) zumindest teilweise mit der Flüssigkeit (24) gefüllt wird, um die Pressoberfläche (18) der ersten Form (12) zumindest teilweise mit der Flüssigkeit (24) zu bedecken.

3. Verfahren nach Anspruch 1 oder 2,
**dadurch gekennzeichnet, dass** die Flüssigkeit (24) bei der Annäherung der ersten Form (12) und der zweiten Form (14) durch mindestens eine in der Pressoberfläche (18) der ersten Form (12) ausgebildete Öffnung (30) verdrängt wird.

4. Verfahren nach einem der Ansprüche 1 bis 3,
**dadurch gekennzeichnet, dass** die Flüssigkeit (24) in einen Sammelbehälter (36) verdrängt wird.

5. Verfahren nach einem der Ansprüche 1 bis 4,
**dadurch gekennzeichnet, dass** zwischen der die Pressoberfläche (18) der ersten Form (12) zumindest teilweise bedeckenden Flüssigkeit (24) und dem zu verformenden Bauteil (16) eine das zu verformende Bauteil (16) gegenüber der Flüssigkeit (24) abdichtende Folie (26) angeordnet wird.

6. Verfahren nach einem der Ansprüche 1 bis 5,
**dadurch gekennzeichnet, dass** die Flüssigkeit (24), die erste Form (12) und/oder die zweite Form (14) beheizt wird/werden.

7. Verfahren nach einem der Ansprüche 1 bis 6,
**dadurch gekennzeichnet, dass** bei der Annäherung der ersten Form (12) und der zweiten Form (14) mindestens ein Zusatzelement mit dem zu verformenden Bauteil (16) verbunden wird.

8. Vorrichtung (10) zur Verformung eines Bauteils (16) mit einer textilen Grundstruktur, insbesondere eines Fasergewebes zur Verwendung in faserverstärkten Verbundmaterialien oder eines Faser-Prepregs, wobei die Vorrichtung (10) umfasst:
- eine erste Form (12) und eine zweite Form (14), zwischen denen das zu verformende Bauteil (16) positionierbar ist, wobei eine Pressoberfläche (18) der ersten Form (12) zumindest teilweise mit einer Flüssigkeit (24) bedeckt ist; und
- eine Folie (26), die zwischen der die Pressoberfläche (18) der ersten Form (12) zumindest teilweise bedeckenden Flüssigkeit (24) und dem zu verformenden Bauteil (16) angeordnet ist, um das zu verformende Bauteil (16) gegenüber der Flüssigkeit (24) abzudichten,
wobei die Vorrichtung (10) dazu eingerichtet ist, bei einem Annähern der ersten Form (12) und der zweiten Form (14), derart, dass das zwischen der ersten Form (12) und der zweiten Form (14) angeordnete Bauteil (16) in eine gewünschte Form gebracht wird, eine teilweise Verdrängung der Flüssigkeit (24) von der Pressoberfläche (18) der ersten Form (12) zu ermöglichen, sodass ein Rest an Flüssigkeit (24) auf der Pressoberfläche (18) der ersten Form (12) während des gesamten Verformungsprozesses verbleibt, wobei das zwischen der ersten Form (12) und der zweiten Form (14) angeordnete Bauteil (16) während des Verformungsprozesses auf der Flüssigkeit (24) schwimmend gelagert ist.

9. Vorrichtung nach Anspruch 8,
**dadurch gekennzeichnet, dass** die Pressoberfläche (18) der ersten Form (12) eine Oberfläche einer in der ersten Form (12) ausgebildeten Ausnehmung (22) zumindest teilweise umfasst, wobei die Ausnehmung (22) zumindest teilweise mit der Flüssigkeit (24) füllbar ist, um die Pressoberfläche (18) der ersten Form (12) zumindest teilweise mit der Flüssigkeit (24) zu bedecken.

10. Vorrichtung nach Anspruch 8 oder 9,
**dadurch gekennzeichnet, dass** in der Pressoberfläche (18) der ersten Form (12) mindestens eine Öffnung (30) ausgebildet ist, durch die bei der Annäherung der ersten Form (12) und der zweiten Form (14) eine Verdrängung der Flüssigkeit (24) ermöglicht wird.

11. Vorrichtung nach einem der Ansprüche 8 bis 10,
**gekennzeichnet durch** einen Sammelbehälter (36) zur Aufnahme der von der Pressoberfläche (18) der ersten Form (12) verdrängten Flüssigkeit (24).

12. Vorrichtung nach einem der Ansprüche 8 bis 11,
**gekennzeichnet durch** eine Heizeinrichtung (38) zur Beheizung der Flüssigkeit (24), der ersten Form (12) und/oder der zweiten Form (14).

13. Vorrichtung nach einem der Ansprüche 8 bis 12,
**dadurch gekennzeichnet, dass** die zweiten Form (14) mindestens eine Aufnahme (40) umfasst, die dazu eingerichtet ist, mindestens ein bei der Annäherung der ersten Form (12) und der zweiten Form (14) mit dem zu verformenden Bauteil (16) zu verbindendes Zusatzelement aufzunehmen.

14. Verwendung eines Verfahrens nach einem der Ansprüche 1 bis 7 und/oder einer Vorrichtung (10) nach einem der Ansprüche 8 bis 13 zur Verformung eines zur Herstellung einer Flugzeugkomponente, insbesondere einer Flugzeugstrukturkomponente vorgesehenen Bauteils (16) mit einer textilen Grundstruktur.

## Claims

1. A method for deforming a component (16) with a textile base structure,
in particular a fibrous fabric for use in fibre-reinforced composite materials or a fiber prepreg, the method comprising the following steps:
- Covering a pressing surface (18) of a first mold (12) at least partially with a liquid (24),
- Arranging the component to be deformed (16) between the first mold (12) and
a second mold (14), and
- bringing the first mold (12) and the second mold (14) closer together in such a way that the component (16) arranged between the first mold (12) and the second mold (14) is brought into a desired shape, the liquid ( 24) partly from the Pressing surface (18) of the first mold (12) is displaced, so that a residue of liquid (24) remains on the pressing surface (18) of the first mold (12) throughout the deformation process, **characterized in that** between the first mold ( 12) and the second mold (14) arranged component (16) is floating on the liquid (24) during the deformation process.

2. The method according to claim 1,
**characterized in that** the pressing surface (18) of the first mold (12) a Surface of a recess (22) formed in the first mold (12) at least partially comprising, wherein the recess (22) is at least partially filled with the liquid (24) to at least partially cover the pressing surface (18) of the first mold (12) with the liquid (24).

3. The method according to claim 1 or 2,
**characterized in that** the liquid (24) in the approach of the first mold (12) and the second mold (14) by at least one in the pressing surface (18) of the first mold (12) formed opening (30) is displaced.

4. The method according to any one of claims 1 to 3,
**characterized in that** the liquid (24) in a collection container (36) is displaced.

5. The method according to any one of claims 1 to 4,
**characterized in that** between the pressing surface (18) of the first mold (12) at least partially covering liquid (24) and to be deformed Component (16) a component (16) to be deformed in relation to the liquid (24) sealing film (26) is arranged.

6. The method according to any one of claims 1 to 5,
**characterized in that** the liquid (24), the first mold (12) and / or the second mold (14) is/are heated.

7. The method according to any one of claims 1 to 6,
**characterized in that** when the first mold (12) and the second mold (14) at least one additional element with the component to be deformed (16) is connected.

8. Device (10) for deforming a component (16) with a textile base structure,
in particular a fiber fabric for use in fiber-reinforced composite materials or a fiber prepreg, the device (10) comprising:
- A first mold (12) and a second mold (14), between which the component (16) to be deformed can be positioned, wherein a pressing surface (18) of the first mold (12) is at least partially covered with a liquid (24); and
- a foil (26) between which the pressing surface (18) of the first mold (12) at least partially covering liquid (24) and the component to be deformed (16) is arranged to the component to be deformed (16) opposite the liquid (24) to seal,
the device (10) being arranged to, upon approaching the first Mold (12) and the second mold (14), such that between the first mold (12) and the second mold (14) arranged component (16) into a desired shape is brought to allow a partial displacement of the liquid (24) from the pressing surface (18) of the first mold (12), so that a residue of liquid (24) on the pressing surface (18) of the first mold (12) throughout the deformation process remains, the component (16) arranged between the first mold (12) and the second mold (14) being mounted in a floating manner on the liquid (24) during the deformation process.

9. Device according to claim 8,
**characterized in that** the pressing surface (18) of the first mold (12) a Surface of a recess (22) formed in the first mold (12) at least partially comprised, wherein the recess (22) can be at least partially filled with the liquid (24) in order to at least partially cover the pressing surface (18) of the first mold (12) with the liquid (24).

10. Device according to claim 8 or 9,
**characterized in that** at least one opening (30) is formed in the pressing surface (18) of the first mold (12) through which the liquid (24) is displaced when the first mold (12) and the second mold (14) approach is made possible.

11. Device according to one of claims 8 to 10,
**characterized by** a sump (36) for receiving liquid (24) displaced from the pressing surface (18) of the first mold (12).

12. Device according to one of claims 8 to 11,
**characterized by** a heating device (38) for heating the liquid (24), the first mold (12) and/or the second mold (14).

13. Device according to one of claims 8 to 12,
**characterized in that** the second mold (14) comprises at least one seat (40) capable of receiving at least one when approaching the first Mold (12) and the second mold (14) with the component to be deformed (16) to record additional element to be connected.

14. Use of a method according to any one of claims 1 to 7 and / or
a device (10) according to any one of claims 8 to 13 for deforming a to Manufacture of an aircraft component, in particular an aircraft structural component provided part (16) with a textile base structure.

## Revendications

1. Procédé de déformation d'une pièce (16) à structure textile à base,
en particulier un tissu fibreux destiné à être utilisé dans des matériaux composites renforcés de fibres
ou un préimprégné fibreux, le procédé comprenant les étapes suivantes :
- recouvrir au moins partiellement une surface de pressage (18) d'un premier moule (12) avec un liquide (24),
- disposer la pièce à déformer (16) entre le premier moule (12) et
un deuxième moule (14), et
- rapprocher le premier moule (12) et le deuxième moule (14) de telle sorte que le composant (16) disposé entre le premier moule (12) et le deuxième moule (14) soit amené dans une forme souhaitée, le liquide ( 24) en partie du
La surface de pressage (18) du premier moule (12) est déplacée, de sorte qu'un résidu de liquide (24) reste sur la surface de pressage (18) du premier moule (12) tout au long du processus de déformation, **caractérisé en ce qu'**entre le premier le moule (12) et le deuxième composant (16) disposé dans le moule (14) flottent sur le liquide (24) pendant le processus de déformation.

2. Procédé selon la revendication 1,
**caractérisé en ce que** la surface de pressage (18) du premier moule (12) a Surface d'un évidement (22) formé dans le premier moule (12) au moins comprenant partiellement, dans lequel l'évidement (22) est au moins partiellement rempli avec le liquide (24) pour recouvrir au moins partiellement la surface de pressage (18) du premier moule (12) avec le liquide (24).

3. Procédé selon la revendication 1 ou 2,
**caractérisé en ce que** le liquide (24) à l'approche du premier moule (12) et le second moule (14) par au moins un dans la surface de pressage (18) du premier moule (12) formé l'ouverture (30) est déplacée.

4. Procédé selon l'une quelconque des revendications 1 à 3,
**caractérisé en ce que** le liquide (24) dans un récipient collecteur (36) est déplacé.

5. Procédé selon l'une quelconque des revendications 1 à 4,
**caractérisé en ce qu'**entre la surface de pressage (18) du premier moule (12) couvrant au moins partiellement le liquide (24) et à déformer Composant (16) un composant (16) à déformer par rapport au liquide (24) un film d'étanchéité (26) est disposé.

6. Procédé selon l'une quelconque des revendications 1 à 5,
**caractérisé en ce que** le liquide (24), le premier moule (12) et/ou le le second moule (14) est/sont chauffé(s).

7. Procédé selon l'une quelconque des revendications 1 à 6,
**caractérisé en ce que** lorsque le premier moule (12) et le deuxième moule (14) au moins un élément supplémentaire avec le composant à déformer (16) est connecté.

8. Dispositif (10) de déformation d'une pièce (16) à structure de base textile,
en particulier un tissu fibreux destiné à être utilisé dans des matériaux composites renforcés de fibres ou un préimprégné fibreux, le dispositif (10) comprenant :
- un premier moule (12) et un deuxième moule (14), entre lesquels le composant (16) à déformer peut être positionné, dans lequel une surface de pressage (18) du premier moule (12) est au moins partiellement recouverte d'un liquide (24); et
- une feuille (26) entre laquelle la surface de pressage (18) du premier moule (12) le liquide recouvrant au moins partiellement (24) et le composant à déformer (16) est disposé sur le composant à déformer (16) à l'opposé du liquide (24) pour sceller,
le dispositif (10) étant agencé pour, à l'approche du premier Moule (12) et le deuxième moule (14), de sorte qu'entre le premier moule (12) et le deuxième moule (14) ont agencé le composant (16) dans une forme souhaitée est amené à permettre un déplacement partiel du liquide (24) de la surface de pressage (18) du premier moule (12), de sorte qu'un résidu de liquide (24) sur la surface de pressage (18) du premier moule (12 ) tout au long du processus de déformation subsiste, la pièce (16) disposée entre le premier moule (12) et le second moule (14) étant montée flottante sur le liquide (24) lors du processus de déformation.

9. Dispositif selon la revendication 8,
**caractérisé en ce que** la surface de pressage (18) du premier moule (12) a Surface d'un évidement (22) formé dans le premier moule (12) au moins partiellement compris, dans lequel l'évidement (22) peut être au moins partiellement rempli avec le liquide (24) afin de recouvrir au moins partiellement la surface de pressage (18) du premier moule (12) avec le liquide (24).

10. Dispositif selon la revendication 8 ou 9,
**caractérisé en ce qu'**au moins une ouverture (30) est formée dans la surface de pressage (18) du premier moule (12) à travers laquelle le liquide (24) est déplacé lorsque le premier moule (12) et le second moule (14) se rapprochent est rendue possible.

11. Dispositif selon l'une des revendications 8 à 10,
**caractérisé par** un puisard (36) pour recevoir le liquide (24) déplacé depuis la surface de pressage (18) du premier moule (12).

12. Dispositif selon l'une des revendications 8 à 11,
**caractérisé par** un dispositif de chauffage (38) pour chauffer le liquide (24), le premier moule (12) et/ou le deuxième moule (14).

13. Dispositif selon l'une des revendications 8 à 12,
**caractérisé en ce que** le second moule (14) comprend au moins un siège (40) apte à recevoir au moins un à l'approche du premier Moule (12) et deuxième moule (14) avec le composant à déformer (16) pour enregistrer l'élément supplémentaire à raccorder.

14. Utilisation d'un procédé selon l'une quelconque des revendications 1 à 7 et/ou
un dispositif (10) selon l'une quelconque des revendications 8 à 13 pour déformer une à Fabrication d'un élément d'aéronef, en particulier d'un élément de structure d'aéronef pourvu d'une pièce (16) à structure de base textile.
